# EUROPEAN PATENT APPLICATION

(11) **EP 4 614 639 A1**
(43) Date of publication of application: **10.09.2025**
(21) Application number: 25158870.3
(22) Date of filing: 19.02.2025
(51) Int. Cl.: H01M 10/04, H01M 10/0585, H01M 50/533, H01M 50/538

(54) **ELECTRODE ASSEMBLY AND RECHARGEABLE BATTERY INCLUDING THE SAME**

(30) Priority: 05.03.2024 KR 20240031625
(71) Applicant: SAMSUNG SDI CO., LTD., Yongin-si, Gyeonggi-do 17084 (KR)
(72) Inventor: KANG, Suhyeon, Yongin-si, Gyeonggi-do 17084 (KR); KIM, Duckhyun, Yongin-si, Gyeonggi-do 17084 (KR); JANG, Woonsuk, Yongin-si, Gyeonggi-do 17084 (KR)
(74) Representative: Marks & Clerk LLP

(57) **Abstract**

An electrode assembly includes a first electrode having a first electrode uncoated portion with a protruding shape, a second electrode having a second electrode uncoated portion with a protruding shape, and a separator disposed between the first electrode and the second electrode, wherein the first electrode uncoated portion includes a first inner tab and a first outer tab separated by a cut line provided inside the first electrode uncoated portion, and wherein the second electrode uncoated portion includes a second inner tab and a second outer tab separated by a cut line provided inside the second electrode uncoated portion.

## Description

### BACKGROUND

### 1. Field

The present disclosure relates to an electrode assembly, a rechargeable battery including the same and a method of manufacturing the rechargeable battery.

### 2. Description of the Related Art

Unlike a primary battery, a rechargeable battery is a battery that is repeatedly charged and discharged. A small-capacity rechargeable battery is used in a portable small electronic device such as a mobile phone, a laptop computer, or a camcorder. A rechargeable battery with large capacity and high density is used as a power source for driving motors of a hybrid vehicle and an electric vehicle or for energy storage.

For example, the rechargeable battery may be formed by stacking a plurality of positive electrodes, a plurality of negative electrodes, and a plurality of separators. The separator is interposed between the positive electrode and the negative electrode, and the positive electrode and the negative electrode are alternately disposed with the separator interposed between them. In order to manufacture an appropriate rechargeable battery, it is necessary to align and stack the electrodes and the separators so that they do not become disturbed by matching centers of the electrodes.

In modern society where a need for the rechargeable battery is increasing, a method that may manufacture the rechargeable battery at a high speed is required to improve supply of the rechargeable battery. Thus, there is a need for a method of properly stacking the electrodes at a high speed.

However, the separator is stacked together with the electrode through a general lamination process, and then a process of fixing the electrode is additionally performed.

If a process of fixing the electrode is added, an additional facility and additional material may be required, so that a manufacturing cost and a manufacturing time are increased.

The above-described information disclosed in the technology that is the background of this disclosure is only for improving understanding of the background of the present disclosure, and thus may include information that does not constitute the prior art.

### SUMMARY OF THE INVENTION

Embodiments include an electrode assembly including a first electrode including a first electrode uncoated portion with a protruding shape, a second electrode including a second electrode uncoated portion with a protruding shape, and a separator disposed between the first electrode and the second electrode, wherein the first electrode uncoated portion includes a first inner tab and a first outer tab separated by a cut line provided inside the first electrode uncoated portion, and wherein the second electrode uncoated portion includes a second inner tab and a second outer tab separated by a cut line provided inside the second electrode uncoated portion.

A protruding direction of the first electrode uncoated portion and a protruding direction of the second electrode uncoated portion may be opposite to each other.

The first outer tab and the second outer tab may be respectively bent in directions opposite to bending directions of the first inner tab and the second inner tab.

Each of the first inner tab and the second inner tab may have a semicircular shape.

Each of the first inner tab and the second inner tab may have a quadrangular shape.

The first inner tab and the second inner tab may be each at least two or more.

A length of each of the first inner tab and the second inner tab may be greater than or equal to 5 mm and the length of the first inner tab may be less than the width of the second outer tab.

A length interval between the first outer tab and the first inner tab, and a length interval between the second outer tab and the second inner tab may be each 10 mm or less.

Each of the first electrode, the second electrode, and the separator may be provided in a plural number, the first electrode and the second electrode may be alternately stacked along a first direction with the separator interposed therebetween, and a plurality of first electrodes, a plurality of second electrodes, and a plurality of separators may be independent of each other.

Embodiments include a rechargeable battery including the electrode assembly as claimed, a case accommodating the electrode assembly, and a cap assembly including a first electrode terminal electrically connected to the first electrode and a second electrode terminal electrically connected to the second electrode, the cap assembly being coupled to the case to cover and seal an opening of the case, wherein the first electrode terminal may be connected to the first electrode through a first current collecting plate connected to the first electrode terminal and at least one of the first inner tab and the first outer tab, and the second electrode terminal may be connected to the second electrode through a second current collecting plate connected to the second electrode terminal and at least one of the second inner tab and the second outer tab.

Embodiments include a method for manufacturing a rechargeable battery, the method including providing the electrode assembly as claimed, providing a cap assembly including a first electrode terminal, a second electrode terminal, a first current collecting plate connected to the first electrode terminal, and a second current collecting plate connected to the second electrode terminal, respectively connecting the first current collecting plate and the second current collecting plate to at least one of the first inner tab and the first outer tab and at least one of the second inner tab and the second outer tab, and inserting the electrode assembly into a case having an accommodation space and coupling the cap assembly to the case to cover an opening of the case so that the cap assembly seals the case.

At least some of the above and other features of the invention are set out in the claims.

However, an effect that may be obtained through the present disclosure is not limited to the above-described effect, and other technical effects not mentioned may be clearly understood by those skilled in the art from a description of the present disclosure below.

### BRIEF DESCRIPTION OF THE DRAWINGS

Features will become apparent to those of ordinary skill in the art by describing in detail example embodiments with reference to the attached drawings, in which:
FIG. 1 is a perspective view showing a rechargeable battery according to one or more embodiments of the present disclosure;
FIG. 2 is a partial exploded perspective view of the rechargeable battery according to one or more embodiments of the present disclosure;
FIG. 3 is a cross-sectional view cut along a line III-III shown in FIG. 1;
FIG. 4 is a perspective view of an electrode assembly according to one or more embodiments of the present disclosure;
FIG. 5(a) is a partial perspective view for describing a structure of a first electrode uncoated portion according to one or more embodiments of the present disclosure;
FIG. 5(b) is a partial perspective view showing a state in which a first inner tab of the first electrode uncoated portion is bent according to one or more embodiments of the present disclosure;
FIG. 6 is a perspective view showing a state in which an inner tab and an outer tab according to one or more embodiments of the present disclosure are bent;
FIG. 7(a) is a plan view showing a case where a shape of the first inner tab is a quadrangular shape according to one or more embodiments of the present disclosure;
FIG. 7(b) is a plan view showing a case where the shape of the first inner tab is a semicircular shape according to one or more embodiments of the present disclosure;
FIG. 7(c) is a plan view showing a case where the first inner tab is provided in a plural number according to one or more embodiments of the present disclosure.
FIG. 8 is a partial plan view for describing width and length intervals of a first outer tab and the first inner tab of the electrode assembly according to one or more embodiments of the present disclosure;
FIG. 9(a) is a flowchart for describing a method for manufacturing a rechargeable battery using a comparative example; and
FIG. 9(b) is a flowchart for describing a method for manufacturing the rechargeable battery according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present.

Below, embodiments of the present disclosure will be described in detail with reference to the attached drawings. A term or a word used in the present specification and claims should not be construed as limited to its usual or dictionary meaning, and should be interpreted as a meaning and a concept conforming to a technical idea of the present disclosure based on a principle that an inventor may properly define a concept of the term to describe his or her disclosure in the best way. Thus, the embodiments described in the present specification and a configuration shown in the drawings are only examples of the present disclosure and do not represent all of the technical idea of the present disclosure, so that it should be appreciated that there may be various equivalents and variations that may replace the embodiments and the configuration at a time at which the present application is filed.

A term "comprises", "includes", "comprising", or "including" if used in the present specification, specifies presence of a shape, a number, a step, an operation, a member, an element, and/or a group thereof, but does not preclude presence or addition of one or more other shape, one or more other number, one or more other operation, one or more other member, one or more other element, and/or a group thereof.

If it is described that two objects are identical, this means that these objects are "substantially identical". Therefore, the substantially identical objects may include objects having deviations considered low in the art, for example, deviations within 5%. Additionally, if it is described that certain parameters are uniform in a predetermined region, this may mean that the parameters are uniform in terms of an average.

Although terms "first", "second", and the like are used to describe various components, the components are not limited by the terms. The terms are only used to distinguish one component from another component, and unless otherwise stated, the first component may be the second component.

Throughout the specification, unless otherwise stated, each component may be singular or plural.

Disposing any component at an "upper portion (or lower portion)" of or "on (or below)" another component may mean not only that the component is disposed in contact with an upper surface (or lower surface) of the other component but also that another component may be interposed between the other component and the component disposed on (or below) the other component.

Additionally, if it is described that a component is "connected" or "coupled" to another component, the components may be directly connected or accessed to each other, but it should be understood that another component may be "interposed" between the components or the components are "connected" or "coupled" through another component.

A term "and/or" used in the present specification includes any and all combinations of one or more of the associated listed items. Additionally, a use of "may" if embodiments of a present disclosure described are described relates to "one or more embodiments of the present disclosure". An expression such as "one or more" preceding a list of components modifies an entire list of components and does not modify an individual component of the list.

Throughout the specification, if referring to "A and/or B", it means A, B, or A and B, unless specifically stated to the contrary, and if referring to "C to D", unless otherwise specified, it means that it is greater than or equal to C and less than or equal to D.

If a phrase such as "at least one of A, B, and C", "at least one of A, B, or C", "at least one selected from the group of A, B, and C", or "at least one selected from A, B, and C" is used to specify a list of elements that are A, B, and C, the phrase may refer to all suitable combinations.

A term "use" may be considered synonymous with a term "utilize". Terms "substantially," "about," and similar terms used in the present specification are used as terms of approximation rather than terms of degree, and are intended to consider intrinsic variation in a measured or calculated value that will be recognized by those skilled in the art.

Although terms "first", "second", "third", etc. may be used in the present specification to describe various elements, components, regions, layers, and/or sections, the elements, components, regions, layers, and/or sections should not be limited by the terms. The terms are only used to distinguish one element, component, region, layer, or section from another element, component, region, layer, or section. Thus, a "first" element, component, region, layer, or section discussed below may be termed a "second" element, component, region, layer, or section without departing from teachings of the embodiments.

Spatially relative terms such as "beneath" "below" "lower" "above" "upper" and the like may be used herein for ease of description to describe a relationship between one element or feature to another element(s) or feature(s) as shown in the drawings. It will be understood that the spatially relative terms are intended to encompass different directions of a device in use or operation in addition to a direction depicted in the drawings. For example, if a device shown in the drawings is turned over, an element described as "below" or "beneath" another element may be understood to be "above" the other element. Thus, the term "below" may encompass directions of both above and below.

The terms used in the present specification are intended to describe embodiments of the present disclosure, and are not intended to limit the present disclosure.

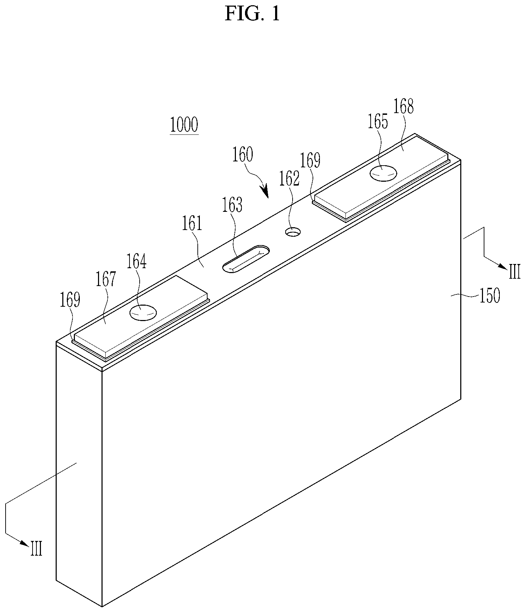

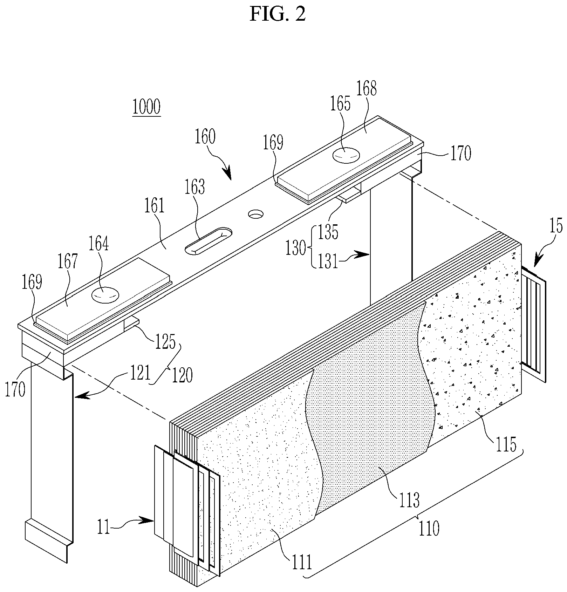

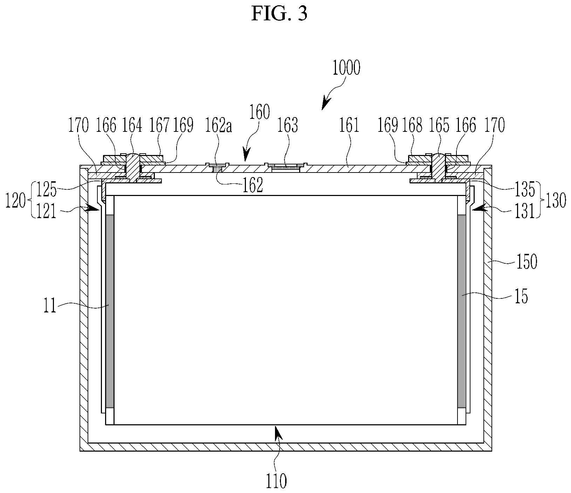

FIG. 1 is a perspective view showing a rechargeable battery according to one or more embodiments of the present disclosure. FIG. 2 is a partial exploded perspective view of the rechargeable battery according to one or more embodiments of the present disclosure. FIG. 3 is a cross-sectional view cut along a line III-III shown in FIG. 1.

Referring to FIGS. 1 to 3, the rechargeable battery 1000 according to the embodiments of the present disclosure may include an electrode assembly 110, a first current collecting plate 120, a second current collecting plate 130, a case 150, and a cap assembly 160.

The case 150 may be formed of a conductive metal such as aluminum, an aluminum alloy, or a nickel-plated steel, and may have an approximately hexahedral shape with an opening and a receiving space into which the electrode assembly 110 may be inserted and seated. For example, the case 150 may have a hexahedral box shape with at least one side open. The cap assembly 160 may be coupled to the opening of the case 150 to seal the case 150. An inner surface of the case 150 may be insulated to prevent an electric short circuit from occurring inside the case 150. In some embodiments, one electrode of the electrode assembly 110 may be electrically connected to the case 150 through the cap assembly 160. Even in this case, the electric short circuit inside the case 150 may be prevented by insulation treatment inside the case 150.

The cap assembly 160 may be coupled to an upper portion of the case 150 toward the opening of the case 150. For example, the cap assembly 160 may include a cap plate 161, an electrolyte injection port 162, a safety vent 163, a first terminal 164, a second terminal 165, a gasket 166, a first terminal plate 167, a second terminal plate 168, a fastening plate 169, and a lower insulating member 170.

The cap plate 161 may be coupled to the case 150 to cover the opening of the case 150 to seal the case 150, and, for example, the cap plate 161 may be formed of the same material as that of the case 150. The cap plate 161 may be coupled to the case 150 by, for example, a welding method (e.g., a laser welding method). In some embodiments, the cap plate 161 may be electrically independent, or may be electrically connected to either the first current collecting plate 120 or the second current collecting plate 130.

The electrolyte injection port 162 for injecting an electrolyte may be formed in the cap plate 161. The electrolyte may be injected into the case 150 through the electrolyte injection port 162, and then the electrolyte injection port 162 may be sealed by a stopper 162a (see FIG. 3).

The safety vent 163 may be relatively thin compared with another region and may be formed at an approximately center of the cap plate 161. The safety vent 163 may be broken to prevent the rechargeable battery 1000 from exploding if an internal pressure of the case 150 is higher than a predetermined breaking pressure.

Each of the first terminal 164 and the second terminal 165 may penetrate the cap plate 161. The first terminal 164 may be coupled to a terminal hole formed at a terminal connection portion 125 of the first current collecting plate 120 to be electrically connected to the first current collecting plate 120. Likewise, the second terminal 165 may be coupled to a terminal hole formed at a terminal connection portion 135 of the second current collecting plate 130 to be electrically connected to the second current collecting plate 130.

The gasket 166 may be disposed between the first and second terminals 164 and 165 and the cap plate 161. The gasket 166 may be formed to surround an outer side of each of the first and second terminals 164 and 165, and may be made of an insulating material. The gasket 166 may seal between each of the first and second terminals 164 and 165 and the cap plate 161. The gasket 166 may prevent external moisture from penetrating into the rechargeable battery 1000, or may prevent the electrolyte included within the rechargeable battery 1000 from flowing out.

The first terminal plate 167 may be coupled to the first terminal 164 and protrude to an upper portion of the cap plate 161. After the first terminal plate 167 is coupled to the first terminal 164, an upper portion of the first terminal 164 may be riveted or a boundary surface between the first terminal plate 167 and the first terminal 164 may be welded so that the first terminal plate 167 is fixed to the first terminal 164.

The second terminal plate 168 may be coupled to the second terminal 165 and protrude to the upper portion of the cap plate 161. After the second terminal plate 168 is coupled to the second terminal 165, an upper portion of the second terminal 165 may be riveted or a boundary surface between the second terminal plate 168 and the second terminal 165 may be welded so that the second terminal plate 168 is fixed to the second terminal 165.

The fastening plate 169 may be disposed between the cap plate 161 and the first terminal plate 167 and between the cap plate 161 and the second terminal plate 168. The fastening plate 169 may be formed of either an electrically conductive material or an insulating material. For example, the fastening plate 169 disposed below the first terminal plate 167 may comprise a conductive material, and the fastening plate 169 disposed below the second terminal plate 168 may comprise an insulating material. For example, the first terminal 164 may have the same polarity as that of the cap plate 161. In one or more embodiments, if the fastening plate 169 is made of the insulating material, the first terminal 164 and the second terminal 165 may be electrically separated from the cap plate 161.

The lower insulating member 170 may be disposed between the first current collecting plate 120 and the cap plate 161 and between the second current collecting plate 130 and the cap plate 161, and may electrically insulate between the first and second current collecting plates 120 and 130 and the cap plate 161.

The electrode assembly 110 may be formed by stacking a first electrode 111 with a thin plate shape or a thin film shape, a separator 113, and a second electrode 115. The first electrode 111 may have a first polarity, and may operate as a positive electrode. The second electrode 115 may have a second polarity, and may operate as a negative electrode. The first electrode and the second electrode may have different polarities depending on the selection of those of ordinary skill in the art.

As shown in FIG. 2, a plurality of first electrodes 111, a plurality of separators 113, and a plurality of second electrodes 115 may be stacked. The first electrode 111 and the second electrode 115 may be alternately stacked with the separator 113 interposed therebetween, and the first electrode 111, the second electrode 115, and the separator 113 may be independent of each other.

For example, an electrode assembly unit may be formed by one first electrode 111, one second electrode 115, and one separator 113 interposed between them. In one or more embodiments, the electrode assembly 110 may be formed by stacking a plurality of electrode assembly units and interposing the separator 113 between the electrode assembly units.

The first electrode 111 may be formed by applying a first electrode active material such as a transition metal oxide or the like to a first electrode current collector formed of a metal foil such as an aluminum foil, and may include a first electrode uncoated portion 11 that is a region where the first electrode active material is not applied that has a protruding shape, i.e., it may protrude outside the electrode assembly 110. The first electrode uncoated portion 11 may provide a path for a current flow between the first electrode 111 and the outside. For example, the first electrode uncoated portion 11 may protrude outside a short side of the electrode assembly to be disposed toward a length direction (e.g., a left direction based on FIG. 2) of the electrode assembly 110.

In one or more embodiments, first electrode uncoated portions 11 may overlap at the same position when the first electrodes 111 are stacked so that the first electrode uncoated portions 11 form a multi-current collecting tab structure. In the present embodiment, the first electrode uncoated portion 11 may be formed as one body with the first electrode current collector, or may be provided separately from the first electrode current collector to be welded to the first electrode current collector so that the first electrode uncoated portion 11 forms a current collecting tab. This first electrode uncoated portion 11 may be aligned with one side of the electrode assembly 110 and protrude therefrom.

The second electrode 115 may be formed by applying a second electrode active material such as graphite, carbon, or the like to a second electrode current collector formed of a metal foil such as a copper foil or a nickel foil, and may include a second electrode uncoated portion 15 that is a region where the second electrode active material is not applied and which may protrude outside the electrode assembly 110.

Second electrode uncoated portions 15 may overlap at the same position when the second electrodes 115 are stacked so that the second electrode uncoated portions 15 form a multi-current collecting tab structure. The second electrode uncoated portion 15 may protrude outside the short side of the electrode assembly to be disposed toward an opposite direction (e.g., a right direction based on FIG. 2) of the length direction of the electrode assembly 110. In the present embodiment, the second electrode uncoated portion 15 may be formed as one body with the second electrode current collector, or may be provided separately from the second electrode current collector to be welded to the second electrode current collector so that the second electrode uncoated portion 15 forms a current collecting tab.

The separator 113 may be disposed between the first electrode 111 and the second electrode 115 to serve to prevent a short circuit and enable movement of lithium ions. The separator 113 may be made of polyethylene, polypropylene, or a composite film of polyethylene and polypropylene. A material of the separator 113 is not limited in the present disclosure.

For example, after the electrodes 111 and 115 are stacked together with the plurality of separators 113, the electrode assembly 110 may maintain a stacked state through a separate insulating tape (not shown) attached to some regions thereof. For example, the insulating tape may maintain a shape of the electrode assembly 110 so that the electrode assembly 110 may be welded to the first and second current collecting plates 120 and 130 at a correct position and a structure of the electrode assembly 110 may be maintained within the case 150 in a final completed rechargeable battery.

The electrode assembly 110 may be substantially accommodated in the case 150 together with the electrolyte. The electrolyte may be formed of a lithium salt such as LiPF₆ or LiBF₄ in an organic solvent such as ethylene carbonate (EC), propylene carbonate (PC), diethyl carbonate (DEC), ethyl methyl carbonate (EMC), or dimethyl carbonate (DMC). For example, the electrolyte may have a liquid phase, a solid phase, or a gel phase.

The current collecting plates 120 and 130 (see FIG. 3) may include the first current collecting plate 120 electrically connected to the first electrode uncoated portion 11 and the second current collecting plate 130 electrically connected to the second electrode uncoated portion 15.

The first current collecting plate 120 may be made of a conductive material such as aluminum or the like, and may be electrically connected to the first electrode 111 by being coupled to the first electrode uncoated portion 11 protruding from one end of the electrode assembly 110.

For example, the first current collecting plate 120 may include an electrode connection portion 121 and a terminal connection portion 125. In one or more embodiments, the electrode connection portion 121 and the terminal connection portion 125 may be coupled to each other through, for example, welding.

The electrode connection portion 121 may be disposed in a vertical direction along one side surface of the electrode assembly 110. The electrode connection portion 121 may be coupled through welding in a state in which the electrode connection portion 121 is in contact with the first electrode uncoated portion 11 of the electrode assembly 110 to have the same first polarity as that of the first electrode uncoated portion 11.

The terminal connection portion 125 may be disposed at an upper portion of the electrode assembly 110, and may be disposed parallel to the cap plate 161. For example, the terminal connection portion 125 may have an approximately flat plate shape, and may be disposed between the electrode assembly 110 and the cap plate 161. The terminal connection portion 125 may include a terminal hole, and for example, the first terminal 164 may be fastened to the terminal hole through a riveting method. The terminal connection portion 125 may be coupled to the electrode connection portion 121 through welding so that one first current collecting plate 120 is formed.

The second current collecting plate 130 may be formed of a conductive material such as nickel or the like, and may be electrically connected to the second electrode 115 by contacting the second electrode uncoated portion 15 protruding from the other end of the electrode assembly 110. The second current collecting plate 130 may include an electrode connection portion 131 and a terminal connection portion 135. Because a shape of the second current collecting plate 130 is the same as that of the first current collecting plate 120, a redundant description thereof will be omitted for convenience of description.

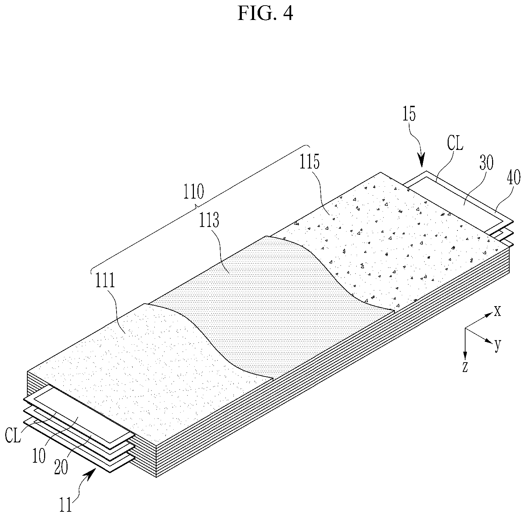

FIG. 4 is a perspective view of an electrode assembly 110 according to one or more embodiments of the present disclosure. Since the electrode assembly 110 of FIG. 4 is the same as the electrode assembly 110 of FIGS. 1 to 3, a redundant description thereof will be omitted.

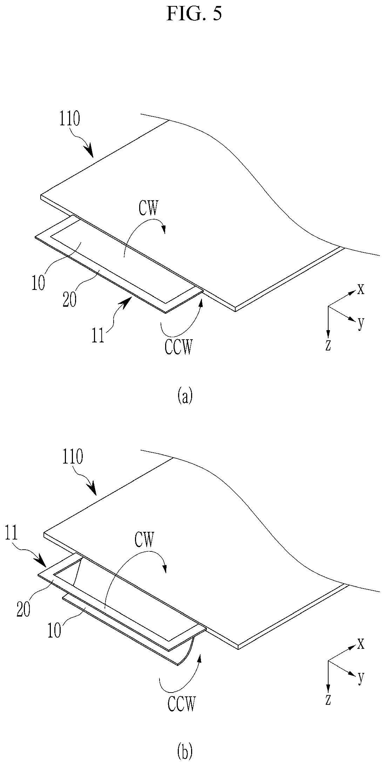

In an x-y-z coordinate axis shown in FIG. 4 and FIG. 5 (hereinafter, the x-y-z coordinate axis is equally applied in other drawings), the x-axis may have a length direction (e.g., a left direction based on the drawings is a -x-axis direction and a right direction based on the drawings is a +x-axis direction) of the electrode assembly 110 or length directions of the electrode uncoated portions 11 and 15. The y-axis may have a direction perpendicular to the x-axis direction, and may have a width direction (e.g., a front direction based on the drawings is a y-axis direction and a rear direction based on the drawings is a -y-axis direction) of the electrode assembly 110 or width directions of the electrode uncoated portions 11 and 15. The z-axis may have a direction vertical to both the x-axis direction and the y-axis direction, and may have a thickness direction (e.g., an upper direction based on the drawings is a +z-axis direction and a lower direction based on the drawings is a -z-axis direction) of the electrode assembly 110 or thickness directions of the electrode uncoated portions 11 and 15.

Referring to FIG. 4, the first electrode uncoated portion 11 may include a first inner tab 10 disposed inside the first electrode uncoated portion 11 and a first outer tab 20 disposed to surround the first inner tab 10. A width of the first inner tab 10 may be smaller than a width of the first electrode uncoated portion 11.

In one or more embodiments, the first inner tab 10 may be formed by cutting an inner region of the first electrode uncoated portion 11. For example, the first inner tab 10 may be separated from the first outer tab 20 by a cut line CL provided inside the first electrode uncoated portion 11. A method by which the first inner tab 10 is cut inside the first electrode uncoated portion 11 may be a method using laser molding or a mold, but the present disclosure is not limited thereto.

Likewise, the second electrode uncoated portion 15 may include a second inner tab 30 disposed inside the second electrode uncoated portion 15 and a second outer tab 40 disposed to surround the second inner tab 30. A width of the second inner tab 30 may be less than a width of the second electrode uncoated portion 15.

Like the first inner tab 10, the second inner tab 30 may be formed by cutting an inner region of the second electrode uncoated portion 15. For example, the second inner tab 30 may be separated from the second outer tab 40 by a cut line CL provided inside the second electrode uncoated portion 15. A method by which the second inner tab 30 is formed may be a method using laser molding or a mold, but the present disclosure is not limited thereto.

FIG. 5(a) is a partial perspective view for describing a structure of the first electrode uncoated portion 11 according to one or more embodiments of the present disclosure. FIG. 5(b) is a partial perspective view showing a state in which the first inner tab 10 of the first electrode uncoated portion 11 is bent according to one or more embodiments of the present disclosure.

Referring to FIG. 5(a) and FIG. 5(b), each of the first inner tab 10 and the first outer tab 20 may be bent. For example, the first inner tab 10 may be bent in a clockwise direction CW, or may be bent in a counterclockwise direction CCW. The first outer tab 20 may be bent in the clockwise direction CW, or may be bent in the counterclockwise direction CCW.

However, the bending direction of the first inner tab 10 and the bending direction of the first outer tab 20 are not the same. For example, if the first inner tab 10 is bent in the clockwise direction CW, the first outer tab 20 may be bent in the counterclockwise direction CCW, and if the first inner tab 10 is bent in the counterclockwise direction CCW, the first outer tab 20 may be bent in the clockwise direction CW.

The first inner tab 10 and the first outer tab 20 of the first electrode uncoated portion 11 of the plurality of first electrodes 111 stacked in this way may be bent. Any one of first inner tabs 10 may be bent so as to overlap the already bent first inner tab 10. Likewise, any one of first outer tabs 20 may be bent to overlap the already bent first outer tab 20.

For example, as described above, the first inner tab 10 and the first outer tab 20 may be bent in opposite directions, so that the first inner tabs 10 are supported by each other and the first outer tabs 20 are supported by each other in a state in which all of the first inner tabs 10 and the first outer tabs 20 of the plurality of first electrodes constituting the electrode assembly 110 are finally bent.

Thus, the first inner tab 10 and the first outer tab 20 may be made of a bundle-type fixation body without a separate fixing means (or a separate fixing device), so that the first electrodes 111 or the second electrodes 115 may be stacked by matching their centers. For example, the first electrodes 111 or the second electrodes 115 may be stacked while meandering of the first electrodes 111 or the second electrodes 115 is prevented. A detailed description thereof will be given subsequently.

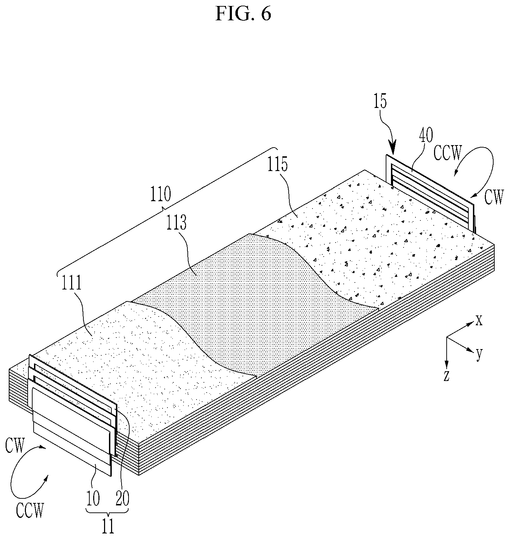

FIG. 6 is a perspective view showing a state in which the first and second inner tabs 10 and 30 and the first and second outer tabs 20 and 40 are bent according to one or more embodiments of the present disclosure. Referring to FIG. 6, the first inner tab 10 of the first electrode uncoated portion 11 may be bent in the counterclockwise direction CCW, and the first outer tab 20 may be bent in the clockwise direction CW. In one or more embodiments, the second inner tab 30 (obscured by the electrode assembly 110 in FIG. 6) of the second electrode uncoated portion 15 may be bent in the clockwise direction CW, and the second outer tab 40 may be bent in the counterclockwise direction CCW. For example, the bending direction of each of the first and second inner tabs 10 and 30 and the bending direction of each of the first and second outer tabs 20 and 40 may be opposite.

In one or more embodiments, if the first and second inner tabs 10 and 30 and the first and second outer tabs 20 and 40 are bent equally in only one direction without distinction in directionality, it is possible to suppress the electrode assembly 110 from moving in the length direction (the +x-axis direction and the -x-axis direction). However, in this case, it is difficult to completely suppress the electrode assembly 110 from moving in the width direction (the +y-axis direction and the -y-axis direction). For example, the first electrode 111 and the second electrode 115 may be meandered in the width direction of the electrode assembly, so that the first electrode 111 and the second electrode 115 are likely to be stacked while being disturbed in the +y-axis direction or the -y-axis direction.

In one or more embodiments, if the first inner tab 10 and the first outer tab 20 are divided and both tabs 10 and 20 are bent in opposite directions as in the embodiment shown in FIG. 6, the electrode assembly 110 may be suppressed from moving in the length direction (the +x-axis direction and the -x-axis direction), and the electrode assembly 110 may be prevented from moving in the width direction (the +y-axis direction and the -y-axis direction) because a bundle stack (or a bundle laminate) of the first inner tab 10 is prevented from moving by a bundle stack (or a bundle laminate) of the first outer tab 20. Thus, when the electrode assembly 100 is formed by stacking the plurality of first electrodes 111, the plurality of separators 113, and the plurality of second electrodes 115, the first electrode 111 and the second electrode 115 may be stacked so that centers of the first electrode 111 and the second electrode 115 coincide.

Likewise, the second inner tab 30 of the second electrode uncoated portion 15 may be bent in a direction opposite to the bending direction of the second outer tab 40. For example, the second inner tab 30 may be bent in the clockwise direction CW, and the second outer tab 40 may be bent in the counterclockwise direction CCW. The second inner tab 30 and the second outer tab 40 may prevent a movement of the electrode assembly 100 in the width direction (the +y-axis direction and the -y-axis direction), and may also prevent a movement of the electrode assembly 100 in the length direction (the +x-axis direction and the -x-axis direction).

Since the inner tabs 10 and 30 and the outer tabs 20 and 40 of the electrode uncoated portions 11 and 15 may be bent in opposite directions, the plurality of first electrodes 111 and the plurality of second electrodes 115 may be stacked so that centers thereof coincide. Thus, a process of aligning the electrode assembly 110 so that the centers of the first electrodes 111 and the second electrodes 115 coincide once again after the first electrodes 111, the separators 113, and the second electrodes 115 are stacked may be omitted.

Since the alignment process (e.g., a fixing process or a meandering prevention process) of the electrode assembly 110 is omitted, additional process materials and additional time required may not be required, so that efficiency of a manufacturing process of the rechargeable battery 1000 including the electrode assembly 110 is improved. For example, a cost and a time required to manufacture the rechargeable battery 1000 may be reduced.

The bending direction of each of the first inner and outer tabs 10 and 20 of the first electrode uncoated portion 11 and the bending direction of each of the second inner and outer tabs 30 and 40 of the second electrode uncoated portion 15 are not limited to the example described above, the first inner tab 10 may be bent in the clockwise direction CW and the first outer tab 20 may be bent in the counterclockwise direction CCW, and the second inner tab 30 may be bent in the counterclockwise direction CW and the second outer tab 40 may be bent in the clockwise direction CW.

In one or more embodiments, the bending direction of the first inner tab 10 may be unrelated to the bending direction of the second inner tab 30. For example, if the first inner tab 10 is bent in the clockwise direction CW, the second inner tab 30 may be bent in the clockwise direction CW, or may be bent in the counterclockwise direction CCW. A relationship between the bending directions is the same for the first outer tab 20 and the second outer tab 40.

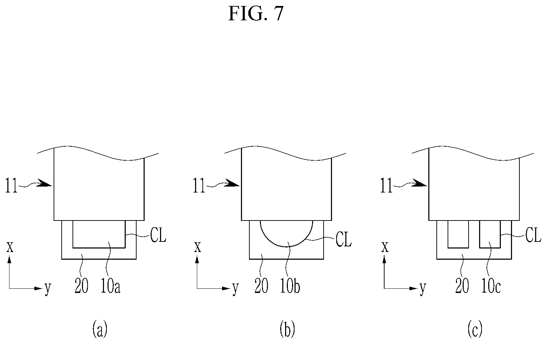

FIGS. 7(a) to 7(c) are plan views for describing a tab shape of the electrode assembly 110 according to one or more embodiments of the present disclosure, and for convenience of description, a first inner tab of the first electrode will be described as an example.

Referring to FIG. 7(a), the shape of the first inner tab 10a of the first electrode uncoated portion 11 may be a quadrangular shape. Since all sides of the first inner tab 10a are straight lines, a movement of the electrode assembly 100 in the width direction (the +y-axis direction and the -y-axis direction) may be more reliably suppressed.

As shown in FIG. 7(b), a shape of the first inner tab 10b may be a semicircular shape. In this case, bending of the first inner tab 10b may be easier. As shown in FIG. 7(c), the first inner tab 10c may be provided in a plural number (e.g., two). In this case, a movement of the electrode assembly 100 in the width direction (the +y-axis direction and the -y-axis direction) may be more reliably suppressed. Although the shape of the inner tab is described as an example of the first inner tab, the shape of the inner tab is not limited to the shapes described above, and may be a shape within a range thought up by those of ordinary skill in the art.

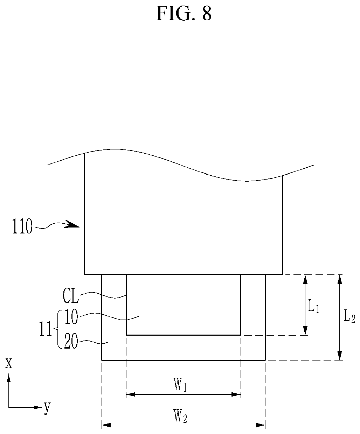

FIG. 8 is a partial plan view for describing a width interval between a width W1 of the first inner tab 10 and a width W2 of the first outer tab 20, and length interval between a length L1 of the first inner tab 10 and a length L2 of the first outer tab 20 of the electrode assembly 110 according to one or more embodiments of the present disclosure.

Referring to FIG. 8, the widths W1 and W2 of the first inner tab 10 and the first outer tab 20 of the electrode assembly 110 according to embodiments of the present disclosure may be set along the y-axis direction, and the lengths L1 and L2 of the first inner tab 10 and the first outer tab 20 may be set along the x-axis direction.

As the width W1 of the first inner tab 10 increases, a movement caused by meandering of the first electrode and the second electrode in the width direction (the y-axis direction) may be prevented. For example, as the width W1 of the first inner tab 10 is wider, welding between the first electrode uncoated portion 11 (that is, the first inner tab 10 and/or the first outer tab 20) and the first current collecting plate 120 may be facilitated.

In one or more embodiments, the length L1 of the first inner tab 10 may be at least 5 mm or more. If the length L1 of the first inner tab 10 is less than 5 mm, a meandering prevention effect of the first electrode and the second electrode may be insignificant.

For example, the length L1 of the first inner tab 10 may be smaller than the length L2 of the first outer tab 20. In one or more embodiments, the length interval between the length L1 of the first inner tab 10 and the length L2 of the first outer tab 20 may be from 5 mm to 10 mm.

If the length interval between the length L1 of the first inner tab 10 and the length L2 of the first outer tab 20 is less than 5 mm, the first inner tab 10 and the first outer tab 20 may not be separated well, and a formation of the first inner tab 10 may be difficult. For example, if the length interval between the length L1 of the first inner tab 10 and the length L2 of the first outer tab 20 exceeds 10 mm, the meandering prevention effect of the first electrode and the second electrode may be insignificant.

Although the embodiments with reference to FIG. 7 and FIG. 8 are described using the first electrode uncoated portion 11 as an example, the above description may be equally applied to the second electrode uncoated portion 15.

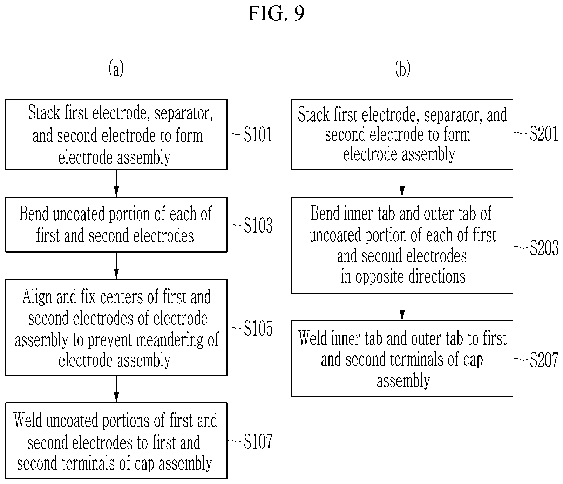

FIG. 9(a) is a flowchart for describing a method for manufacturing a rechargeable battery using a comparative example. FIG. 9(b) is a flowchart for describing a method for manufacturing the rechargeable battery 1000 according to one or more embodiments of the present disclosure.

Referring to FIG. 9(a), in order to manufacture the rechargeable battery in the comparative example, a step S101 of stacking a plurality of first electrodes, a plurality of separators, and a plurality of second electrodes to form an electrode assembly, a step S 103 of bending an uncoated portion of each of first and second electrodes, a step S 105 of aligning and fixing centers of the first and second electrodes of the electrode assembly so as to coincide the centers of the first and second electrodes, and a final step S107 of welding the uncoated portions of the first and second electrode to first and second terminals provided in a cap assembly are required.

Referring to FIG. 9(b), the rechargeable battery 1000 according to one or more embodiments of the present disclosure may be manufactured by stacking the plurality of first electrodes 111, the plurality of separators 113, and the plurality of second electrodes 115 to form the electrode assembly 110 (S201), dividing the inner tabs 10 and 30 and the outer tabs 20 and 40 with respect to the uncoated portions 11 and 15 of the first electrode 111 and the second electrode 115 to bend the inner tabs 10 and 30 and the outer tabs 20 and 40 (S203), and welding the electrode uncoated portions 11 and 15 (that is, the first and second inner tabs 10 and 30 and/or the first and second outer tabs 20 and 40) to the terminals 164 and 165 (S207)

Thus, when the electrode assembly 110 is manufactured, a separate process of aligning and fixing the uncoated portions forming the tabs may be omitted. Therefore, the rechargeable battery 1000 may be efficiently manufactured. Further, a cost and a time required to manufacture the rechargeable battery 1000 may be reduced.

In embodiments of the present disclosure, a compound (i.e., a lithium intercalation compound) capable of reversible intercalation and deintercalation of lithium may be used as a positive electrode active material constituting a positive electrode active material layer of the positive electrode. For example, one or more types of composite oxides of a metal selected from cobalt, manganese, nickel, and a combination thereof and lithium may be used as the positive electrode active material.

The composite oxide may be lithium transition metal composite oxide, and for example, the composite oxide may include lithium nickel-based oxide, lithium cobalt-based oxide, lithium manganese-based oxide, a lithium iron phosphate-based compound, cobalt-free nickel-manganese-based oxide, or a combination thereof.

As an example, a compound expressed by any one of the following chemical formulas may be used as the positive electrode active material. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

The positive electrode according to embodiments may include a positive electrode current collector at which the positive electrode active material layer is disposed, and the positive electrode active material layer may include a binder and/or a conductive material.

A content of the positive electrode active material may be 90 wt% to 99.5 wt% based on 100 wt% of the positive electrode active material layer, and a content of each of the binder and the conductive material may be 0.5 wt% to 5 wt% based on 100 wt% of the positive electrode active material layer.

Aluminum (Al) may be used as the positive electrode current collector, but the present disclosure is not limited thereto.

In one or more embodiments of the present disclosure, a negative electrode active material constituting a negative electrode active material layer of the negative electrode may include a material capable of reversible intercalation and deintercalation of a lithium ion, a lithium metal, an alloy of the lithium metal, a material capable of doping and dedoping lithium, or transition metal oxide.

For example, the material capable of reversible intercalation and deintercalation of the lithium ion may include a carbon-based negative electrode active material (for example, crystalline carbon, amorphous carbon, or a combination thereof). An example of the crystalline carbon may include graphite such as natural graphite or artificial graphite, and an example of the amorphous carbon may include soft carbon, hard carbon, mesophase pitch carbide, fired cokes, or the like.

A Si-based negative electrode active material or a Sn-based negative electrode active material may be used as the material capable of doping and dedoping lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to an embodiment, the silicon-carbon composite may have a form in which the amorphous carbon is coated on a surface of a silicon particle.

The silicon-carbon composite may further include crystalline carbon. For example, the silicon-carbon composite may include a core including the crystalline carbon and the silicon particle and an amorphous carbon coating layer disposed on a surface of the core.

The negative electrode according to embodiments may include a negative electrode current collector at which the negative electrode active material layer is disposed, and the negative electrode active material layer may include a binder and/or a conductive material.

For example, the negative electrode active material layer may include 90 wt% to 99 wt% of the negative electrode active material based on 100 wt% of the negative electrode active material, 0.5 wt% to 5 wt% of the binder, and 0 wt% to 5 wt% of the conductive material.

A non-aqueous binder, an aqueous binder, a dry binder, or a combination thereof may be used as the binder. If the aqueous binder is used as the binder, it may further include a cellulose-based compound capable of imparting viscosity.

The negative electrode current collector may be selected from a copper foil, a nickel foil, a stainless-steel foil, a titanium foil, a nickel foam, a copper foam, a polymer substrate coated with a conductive metal, and a combination thereof.

The electrolyte for a lithium rechargeable battery may include a non-aqueous organic solvent and a lithium salt.

The non-aqueous organic solvent may serve as a medium through which ions involved in an electrochemical reaction of the battery may move.

The non-aqueous organic solvent may be a carbonate-based solvent, an ester-based solvent, an ether-based solvent, a ketone-based solvent, an alcohol-based solvent, an aprotic solvent, or a combination thereof, and the materials may be used alone or in combination of two or more types.

If the carbonate-based solvent is used, a mixture of cyclic carbonate and linear carbonate may be used.

Depending on a type of the lithium rechargeable battery, the separator may exist between the positive electrode and the negative electrode. Polyethylene, polypropylene, polyvinylidene fluoride, or a multilayer film with two or more layers thereof may be used as the separator.

The separator may include a porous substrate and a coating layer including an organic material, an inorganic material, or a combination thereof disposed on one surface or both surfaces of the porous substrate.

The organic material may include a polyvinylidenefluoride-based polymer or a (metha)acryl-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic material and the inorganic material may be mixed in one coating layer, or a coating layer including the organic material and a coating layer including the inorganic material may be stacked.

The present disclosure provides, for example, an electrode assembly configured so as not to require separate electrode fixation when an electrode assembly for a rechargeable battery is manufactured.

Although the present disclosure has been described above by limited embodiments and the drawings, the present disclosure is not limited thereto, and various modifications and variations may be made within an equivalent scope of the technical idea of the present disclosure and claims to be described below by those of ordinary skill in the art.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of symbols>

10: first inner tab
11: first electrode uncoated portion
15: second electrode uncoated portion
20: first outer tab
30: second inner tab
40: second outer tab
110: electrode assembly
111: first electrode
113: separator
115: second electrode
120: first current collecting plate
130: second current collecting plate
150: case
160: cap assembly
1000: rechargeable battery
W1: width of first inner tab
W2: width of first outer tab
L1: length of first inner tab
L2: length of first outer tab

## Claims

1. An electrode assembly comprising:
a first electrode comprising a first electrode uncoated portion with a protruding shape;
a second electrode comprising a second electrode uncoated portion with a protruding shape; and
a separator disposed between the first electrode and the second electrode,
wherein the first electrode uncoated portion comprises a first inner tab and a first outer tab separated by a cut line provided inside the first electrode uncoated portion, and wherein the second electrode uncoated portion comprises a second inner tab and a second outer tab separated by a cut line provided inside the second electrode uncoated portion.

2. The electrode assembly as claimed in claim 1, wherein a protruding direction of the first electrode uncoated portion and a protruding direction of the second electrode uncoated portion are opposite to each other.

3. The electrode assembly as claimed in claim 1 or 2, wherein the first outer tab and the second outer tab are respectively bent in directions opposite to bending directions of the first inner tab and the second inner tab.

4. The electrode assembly as claimed in claim 1, 2 or 3, wherein each of the first inner tab and the second inner tab has a semicircular shape.

5. The electrode assembly as claimed in claim 1, 2 or 3, wherein each of the first inner tab and the second inner tab has a quadrangular shape.

6. The electrode assembly as claimed in any preceding claim, wherein the first inner tab and the second inner tab are each at least two or more.

7. The electrode assembly as claimed in any preceding claim, wherein a length of each of the first inner tab and the second inner tab is greater than or equal to 5 mm and the length of the first inner tab is less than the width of the second outer tab.

8. The electrode assembly as claimed in claim 7, wherein a length interval between the first outer tab and the first inner tab, and a length interval between the second outer tab and the second inner tab are each 10 mm or less.

9. The electrode assembly as claimed in any preceding claim, wherein each of the first electrode, the second electrode, and the separator is provided in a plural number, the first electrode and the second electrode are alternately stacked along a first direction with the separator interposed therebetween, and a plurality of first electrodes, a plurality of second electrodes, and a plurality of separators are independent of each other.

10. A rechargeable battery comprising:
the electrode assembly as claimed in any preceding claim;
a case accommodating the electrode assembly; and
a cap assembly comprising a first electrode terminal electrically connected to the first electrode and a second electrode terminal electrically connected to the second electrode, the cap assembly being coupled to the case to cover and seal an opening of the case,
wherein the first electrode terminal is connected to the first electrode through a first current collecting plate connected to the first electrode terminal and at least one of the first inner tab and the first outer tab, and the second electrode terminal is connected to the second electrode through a second current collecting plate connected to the second electrode terminal and at least one of the second inner tab and the second outer tab.

11. A method for manufacturing a rechargeable battery, the method comprising:
providing the electrode assembly as claimed in any one of claims 1 to 9;
providing a cap assembly comprising a first electrode terminal, a second electrode terminal, a first current collecting plate connected to the first electrode terminal, and a second current collecting plate connected to the second electrode terminal;
respectively connecting the first current collecting plate and the second current collecting plate to at least one of the first inner tab and the first outer tab and at least one of the second inner tab and the second outer tab; and
inserting the electrode assembly into a case having an accommodation space and coupling the cap assembly to the case to cover an opening of the case so that the cap assembly seals the case.
